# EUROPEAN PATENT SPECIFICATION

(11) **EP 1 117 742 B1**
(45) Date of publication and mention of the grant of the patent: **14.06.2006**
(21) Application number: 99925937.7
(22) Date of filing: 27.05.1999
(51) Int. Cl.: C08L 69/00, C08K 13/02, C08K 5/51, C08K 3/08, C08L 51/04, C08L 25/08

(54) **FLAME RETARDANT POLYCARBONATE/RUBBER-MODIFIED GRAFT COPOLYMER RESIN BLEND HAVING A METALLIC APPEARANCE**
FLAMMHEMMENDE POLYCARBONAT/KAUTSCHUKMODIFIZIERTE PFROPFCOPOLYMERMISCHUNG MIT METALLISCHEM AUSSEHEN
MELANGE DE RESINES DE COPOLYMERES GREFFES MODIFIES PAR CAOUTCHOUC/POLYCARBONATE A EFFET IGNIFUGE, AYANT UN ASPECT METALLIQUE

(30) Priority: 27.07.1998 US 122942
(43) Date of publication of application: 25.07.2001
(73) Proprietor: GENERAL ELECTRIC COMPANY, Schenectady, NY 12345 (US)
(72) Inventor: VAN DER HELDER, Lambertus, Johannes, NL-4617 AG Bergen op Zoom (US); CORNU, Laurent, Walkington, Beverley HU17 8XX (GB)
(74) Representative: Szary, Anne Catherine
(86) International application number: PCT/US1999/011750
(87) International publication number: WO 2000/006648

(56) References cited:
- EP-A- 0 640 655
- EP-A- 0 755 977
- US-A- 5 530 051

## Description

### FIELD OF THE INVENTION

The invention relates to flame retardant resin compositions that are based on blends of polycarbonate resin and rubber modified graft copolymers and that exhibit a metallic appearance.

### BRIEF DESCRIPTION OF THE RELATED ART

Flame retardant compositions containing an aromatic polycarbonate resin a graft copolymer, a fluoropolymer and a phosphorus containing flame retardant compound are known and have been found to exhibit good flame retardency and good heat resistance, see for example, coassigned U.S. Patent Number 5,204,394.

A thermoplastic resin composition that exhibits the high performance and good flame retardant properties of the compositions disclosed in the '394 patent and that exhibit a metallic appearance are desired.

### SUMMARY OF THE INVENTION

The thermoplastic resin composition of the present invention comprises, based on 100 parts by weight ("pbw") of the composition:
(a) from 50 to 80 pbw of an aromatic polycarbonate resin,
(b) from 5 to 10 pbw of a rubber modified graft copolymer comprising a discontinuous elastomeric phase dispersed in a continuous rigid thermoplastic phase, wherein at least a portion of the rigid thermoplastic phase is chemically grafted to the elastomeric phase, at least a portion of the rigid thermoplastic phase is not chemically grafted to the elastomeric phase
(c) up to 15 pbw of a thermoplastic polymer having a glass transition temperature of greater than 25°C, provided that the combined amount of the thermoplastic polymer and the portion of the rigid thermoplastic phase that is not chemically grafted to the elastomeric phase of the graft copolymer does not exceed 20 pbw of the composition,
(d) from 5 to 15 pbw of a phosphorus-containing flame retardant compound, and
(e) from 0.05 to 5 pbw metallic particles.
(f) a composite rubber impact modifier comprising a polyorganosiloxanelpolyalkyl (meth)acrylate composite rubber substrate and a rigid thermoplastic superstrate, at least a portion of which is chemically bonded to the polyorganosiloxane/polyalkyl (meth)acrylate composite rubber substrate.

The composition of the present invention exhibits a metallic appearance and good physical properties, while unexpectedly providing good flame retardant properties.

### DETAILED DESCRIPTION OF THE INVENTION

In a preferred embodiment, the thermoplastic resin composition of the present invention is comprises from 60 to 80 pbw, more preferably from 65 to 80 pbw, of the aromatic polycarbonate resin from 5 to 8 pbw, more preferably from 6 to 8 pbw, of the rubber modified graft copolymer, from 5 to 15 pbw, more preferably from 8 to 10 pbw, of the rigid copolymer, from 8 to 15 pbw, more preferably from 9 to 12 pbw, of the phosphorus containing flame retardant compound and, from 0.1 to 5 pbw, more preferably from 0.2 to 4 pbw of the metallic particles.

In a preferred embodiment, the composition comprises the composite rubber impact modifier in an amount of from 0.01 to 5 pbw, more preferably from 0.5 to 2 pbw, of the composite rubber impact modifier, based on 100 pbw of the thermoplastic resin composition.

In a preferred embodiment, the composition consists essentially of the aromatic polycarbonate resin, the graft copolymer, the thermoplastic polymer, the phosphorus-containing flame retardant compound, the metallic particles and the silicone rubber impact modifier.

### Aromatic Polycarbonate Resin

Aromatic polycarbonate resins suitable for use as the polycarbonate resin component of the thermoplastic resin composition of the present invention are known compounds whose preparation and properties have been described, see, generally, U.S. Patent Nos. 3,169,121, 4,487,896 and 5,411,999.

In a preferred embodiment, the aromatic polycarbonate resin component of the present invention is the reaction product of a dihydric phenol according to the structural formula (I):

Ho- A -OH (I)

wherein A is a divalent aromatic radical,
with a carbonate precursor and contains structural units according to the formula (II): 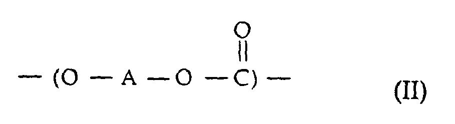 wherein A is defined as above.

As used herein, the term "divalent aromatic radical "includes those divalent radicals containing a single aromatic ring such as phenylene, those divalent radicals containing a condensed aromatic ring system such as, for example, naphthlene, those divalent radicals containing two or more aromatic rings joined by a non-aromatic linkage, such as for example, an alkylene, alkylidene or sulfonyl group, any of which may be substituted at one or more sites on the aromatic ring with, for example, a halo group or (C₁-C₆)alkyl group.

In a preferred embodiment, A is a divalent aromatic radical according to the formula (XXI):

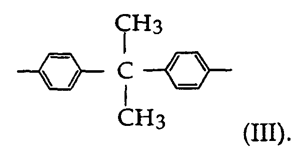

Suitable dihydric phenols include, for example, one or more of 2, 2-bis-(4-hydroxyphenyl) propane ("bisphenol A"), 2,2-bis(3,5-dimethyl-4-hydroxyphenyl)propane, bis(4-hydroxyphenyl) methane, 4,4-bis(4-hydroxyphenyl)heptane, 3,5,3',5'-tetrachloro-4,4'-dihydroxyphenyl)propane, 2,6-dihydroxy naphthalene, hydroquinone, 2,4'-dihydroxyphenyl sulfone. In a highly preferred embodiment, the dihydric phenol is bisphenol A.

The carbonate precursor is one or more of a carbonyl halide, a carbonate ester or a haloformate. Suitable carbonyl halides include, for example, carbonyl bromide and carbonyl chloride. Suitable carbonate esters include, such as for example, diphenyl carbonate, dichlorophenyl carbonate, dinaphthyl carbonate, phenyl tolyl carbonate and ditolyl carbonate. Suitable haloformates include, for example, bishaloformates of a dihydric phenols, such as, for example, hydroquinone, or glycols, such as, for example, ethylene glycol, neopentyl glycol. In a highly preferred embodiment, the carbonate precursor is carbonyl chloride.

Suitable aromatic polycarbonate resins include linear aromatic polycarbonate resins and branched aromatic polycarbonate resins. Suitable linear aromatic polycarbonates resins include, e.g., bisphenol A polycarbonate resin. Suitable branched polycarbonates are known and are made by reacting a polyfunctional aromatic compound with a dihydric phenol and a carbonate precursor to form a branched polymer, see generally, U. S. Patent Nos. 3,544,514, 3,635,895 and 4,001,184. The polyfunctional compounds are generally aromatic and contain at least three functional groups which are carboxyl, carboxylic anhydrides, phenols, haloformates or mixtures thereof, such as, for example, 1,1,1-tri(4-hydroxyphenyl)ethane, 1,3,5,-trihydroxybenzene, trimellitic anhydride, trimellitic acid, trimellityl trichloride, 4-chloroformyl phthalic anhydride, pyromellitic acid, pyromellitic dianhydride, mellitic acid, mellitic anhydride, trimesic acid, benzophenonetetracarboxylic acid, benzophenone-tetracarboxylic dianhydride. The preferred polyfunctional aromatic compounds are 1,1,1-tri(4-hydroxyphenyl)ethane, trimellitic anhydride or trimellitic acid or their haloformate derivatives.

In a preferred embodiment, the polycarbonate resin component of the present invention is a linear polycarbonate resin derived from bisphenol A and phosgene.

In a preferred embodiment, the weight average molecular weight of the polycarbonate resin is from about 10,000 to about 200,000 grams per mole ("g/mol"), as determined by gel permeation chromatography relative to polystyrene. Such resins typically exhibit an intrinsic viscosity of about 0.3 to about 1.5 deciliters per gram in methylene chloride at 25°C.

Polycarbonate resins are made by known methods, such as, for example, interfacial polymerization, transesterification, solution polymerization or melt polymerization.

Copolyester-carbonate resins are also suitable for use as the aromatic polycarbonate resin component of the present invention. Copolyester-carbonate resins suitable for use as the aromatic polycarbonate resin component of the thermoplastic resin composition of the present invention are known compounds whose preparation and properties have been described, see, generally, U.S. Patent Nos. 3,169,121, 4,430,484 and 4,487,896.

Copolyester-carbonate resins comprise linear or randomly branched polymers that contain recurring carbonate groups, carboxylate groups and aromatic carbocyclic groups in the polymer chain, in which at least some of the carbonate groups are bonded directly to the ring carbon atoms of the aromatic carbocyclic groups.

In a preferred embodiment, the copolyester-carbonate resin component of the present invention is derived from a carbonate precursor, at least one dihydric phenol and at least one dicarboxylic acid or dicarboxylic acid equivalent. In a preferred embodiment, the dicarboxylic acid is one according to the formula (IV): 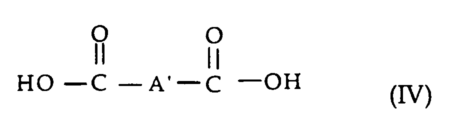 wherein A' is alkylene, alkylidene, cycloaliphatic or aromatic and is preferably a non-substituted phenylene radical or a substituted phenylene radical that is substituted at one or more sites on the aromatic ring, wherein each of such substituent groups is independently (C₁-C₆) alkyl, and the copolyester carbonate resin comprises first structural units according to formula (II) above and second structural units according to formula (V): 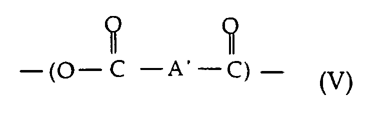 wherein A' is defined as above.

Suitable carbonate precursors and dihydric phenols are those disclosed above.

Suitable dicarboxylic acids, include, for example, phthalic acid, isophthalic acid, terephthalic acid, dimethyl terephthalic acid, oxalic acid, malonic acid, succinic acid, glutaric acid, adipic acid, pimelic acid, suberic acid, azelaic acid, sebacic acid, dimethyl malonic acid, 1,12-dodecanoic acid, *cis*-1,4-cyclohexane dicarboxylic acid, *trans*-1,4-cyclohexane dicarboxylic acid, 4,4'- bisbenzoic acid, naphthalene-2,6-dicarboxylic acid. Suitable dicarboxylic acid equivalents include, for example, anhydride, ester or halide derivatives of the above disclosed dicarboxylic acids, such as, for example, phthalic anhydride, dimethyl terephthalate, succinyl chloride.

In a preferred embodiment, the dicarboxylic acid is an aromatic dicarboxylic acid, more preferably one or more of terephthalic acid and isophthalic acid.

In a preferred embodiment, the ratio of ester bonds to carbonate bonds present in the copolyester carbonate resin is from 0.25 to 0.9 ester bonds per carbonate bond.

In a preferred embodiment, the copolyester-carbonate copolymer has a weight average molecular weight of from about 10,000 to about 200,000 g/mol.

Copolyester-carbonate resins are made by known methods, such as, for example, interfacial polymerization, transesterification, solution polymerization or melt polymerization.

### Rubber Modified Thermoplastic Resin

Rubber modified thermoplastic resins suitable as the rubber modified thermoplastic resin of the present invention comprise a discontinuous elastomeric phase dispersed in a continuous rigid thermoplastic phase, wherein at least a portion of the rigid thermoplastic phase is chemically grafted to the elastomeric phase.

### (a) Elastomeric Phase

Suitable materials for use as the elastomeric phase are polymers those having a glass transition temperature (T_{g}) of less than or equal to 25°C, more preferably less than or equal to 0 °C, and even more preferably less than or equal to -30°C. As referred to herein, the T_{g} of a polymer is the T_{g} value of polymer as measured by differential scanning calorimetry (heating rate 20° C/minute, with the T_{g} value being determined at the inflection point).

In a preferred embodiment, the elastomer phase comprises a polymer having repeating units derived from one or more monoethylenically unsaturated monomers selected from conjugated diene monomers, non-conjugated diene monomers or (C₁-C₁₂) alkyl (meth)acrylate monomers

Suitable conjugated diene monomers include, e.g., 1,3-butadiene, isoprene, 1,3-heptadiene, methyl-1,3-pentadiene, 2,3-dimethylbutadiene, 2-ethyl-1,3-pentadiene, 1,3-hexadiene, 2, 4, hexadiene, dichlorobutadiene, bromobutadiene and dibromobutadiene as well as mixtures of conjugated diene monomers. In a preferred embodiment, the conjugated diene monomer is 1,3-butadiene.

Suitable non-conjugated diene monomers include, e.g., ethylidene norbornene, dicyclopentadiene, hexadiene or phenyl norbornene.

As used herein, the term "(C₁-C₁₂)alkyl" means a straight or branched alkyl substituent group having from 1 to 12 carbon atoms per group and includes, e.g., methyl, ethyl, n-butyl, sec-butyl, t-butyl, n-propyl, iso-propyl, pentyl, hexyl, heptyl, octyl, nonyl, decyl, undecyl and dodecyl, and the terminology "(meth)acrylate monomers" refers collectively to acrylate monomers and methacrylate monomers. Suitable (C₁-C₁₂)alkyl (meth)acrylate monomers include (C₁-C₁₂)alkyl acrylate monomers, e.g., ethyl acrylate, butyl acrylate, iso-pentyl acrylate, n-hexyl acrylate, 2-ethyl hexyl acrylate, and their (C₁-C₁₂)alkyl methacrylate analogs such as, e.g., methyl methacrylate, ethyl methacrylate, propyl methacrylate, iso-propyl methacrylate, butyl methacrylate, hexyl methacrylate, decyl methacrylate.

The elastomeric phase may, optionally, include up to about 25 percent by weight ("wt%") of one or more monomers selected from (C₂-C₈)olefin monomers, vinyl aromatic monomers and monoethylenically unsaturated nitrile monomers.

As used herein, the term "(C₂-C₈)olefin monomers" means a compound having from 2 to 8 carbon atoms per molecule and having a single site of ethylenic unsaturation per molecule. Suitable (C₂-C₈)olefin monomers include, e.g., ethylene, propene, 1-butene, 1-pentene, heptene.

Suitable vinyl aromatic monomers include, e.g., styrene and substituted styrenes having one or more alkyl, alkoxyl, hydroxyl or halo substituent group attached to the aromatic ring, including, e.g., α-methyl styrene, p-methyl styrene, vinyl toluene, vinyl xylene, trimethyl styrene, butyl styrene, chlorostyrene, dichlorostyrene, bromostyrene, p-hydroxystyrene, methoxystyrene and vinyl-substituted condensed aromatic ring structures, such as, e.g., vinyl naphthalene, vinyl anthracene, as well as mixtures of vinyl aromatic monomers.

As used herein, the term "monoethylenically unsaturated nitrile monomer" means an acyclic compound that includes a single nitrile group and a single site of ethylenic unsaturation per molecule and includes, e.g., acrylonitrile, methacrylonitrile, α-chloro acrylonitrile.

The elastomeric phase may, optionally, include a minor amount, e.g., up to 5 wt%, of repeating units derived from a polyethylenically unsaturated. "crosslinking" monomer, e.g., butylene diacrylate, divinyl benzene, butene diol dimethacrylate, trimethylolpropane tri(meth)acrylate. As used herein, the term "polyethylenically unsaturated" means having two or more sites of ethylenic unsaturation per molecule.

The elastomeric phase may, particularly in those embodiments wherein the elastomeric phase has repeating units derived from alkyl (meth)acrylate monomers, include a minor amount, e.g., up to 5 wt% of repeating units derived from a polyethylenically unsaturated "graftlinking" monomer. Suitable graftlinking monomers include those monomers having a first site of ethylenic unsaturation with a reactivity similar to that of the monoethylenically unsaturated monomers from which the respective substrate or superstrate is derived and a second site of ethylenic unsaturation with a relative reactivity that is substantially different from that of the monoethylenically unsaturated monomers from which the elastomeric phase is derived so that the first site reacts during synthesis of the elastomeric phase and the second site is available for later reaction under different reaction conditions, e.g., during synthesis of the rigid thermoplastic phase. Suitable graftlinking monomers include, e.g., allyl methacrylate, diallyl maleate, triallyl cyanurate.

In a preferred embodiment, the elastomeric phase comprises from 60 to 100 wt% repeating units derived from one or more conjugated diene monomers and from 0 to 40 wt% repeating units derived from one or more monomers selected from vinyl aromatic monomers and monoethylenically unsaturated nitrile monomers, such as, for example, a styrene-butadiene copolymer, an acrylonitrile-butadiene copolymer or a styrene-butadiene-acrylonitrile copolymer.

In an alternative preferred embodiment, the elastomeric phase comprises repeating units derived from one or more (C₁-C₁₂)alkyl acrylate monomers. In a more highly preferred embodiment, the rubbery polymeric substrate comprises from 40 to 95 wt% repeating units derived from one or more (C₁-C₁₂)alkyl acrylate monomers, more preferably from one or more monomers selected from ethyl acrylate, butyl acrylate and n-hexyl acrylate.

In a preferred embodiment, the elastomeric phase is made by aqueous emulsion polymerization in the presence of a free radical initiator, e.g., an azonitrile initiator, an organic peroxide initiator, a persulfate initiator or a redox initiator system, and, optionally, in the presence of a chain transfer agent, e.g., an alkyl mercaptan and coagulated to form particles of elastomeric phase material. In a preferred embodiment, the emulsion polymerized particles of elastomeric phase material have a weight average particle size of 50 to 800 nm, more preferably, of from 100 to 500 nm, as measured by light transmission. The size of emulsion polymerized elastomeric particles may optionally be increased by mechanical or chemical agglomeration of the emulsion polymerized particles, according to known techniques.

### (b) Rigid Thermoplastic Phase

The rigid thermoplastic resin phase comprises one or more thermoplastic polymers and exhibits a T_{g} of greater than 25°C, preferably greater than or equal to 90°C and even more preferably greater than or equal to 100°C.

In a preferred embodiment, the rigid thermoplastic phase comprises a polymer or a mixture of two or more polymers each having repeating units derived from one or more monomers selected from the group consisting of (C₁-C₁₂)alkyl (meth)acrylate monomers, vinyl aromatic monomers and monoethylenically unsaturated nitrile monomers. Suitable (C₁-C₁₂)alkyl (meth)acrylate monomers, vinyl aromatic monomers and monoethylenically unsaturated nitrile monomers are those set forth above in the description of the elastomeric phase.

In a highly preferred embodiment, rigid thermoplastic phase comprises one or more vinyl aromatic polymers. Suitable vinyl aromatic polymers comprise at least 50 wt% repeating units derived from one or more vinyl aromatic monomers.

In a preferred embodiment, the rigid thermoplastic resin phase comprises a vinyl aromatic polymer having first repeating units derived from one or more vinyl aromatic monomers and having second repeating units derived from one or more monoethylenically unsaturated nitrile monomers.

The rigid thermoplastic phase is made according to known processes, e.g., mass polymerization, emulsion polymerization, suspension polymerization or combinations thereof, wherein a at least a portion of the rigid thermoplastic phase is chemically bonded, i.e., "grafted" to the elastomeric phase via reaction with unsaturated sites present in the elastomeric phase. The unsaturated sites in the elastomeric phase are provided, e.g., by residual unsaturated sites in repeating units derived from a conjugated diene or by residual unsaturated sites in repeating units derived from a graftlinking monomer.

In a preferred embodiment, at least a portion of the rigid thermoplastic phase is made by an aqueous emulsion or aqueous suspension polymerization reaction in the presence of elastomeric phase and a polymerization initiator system, e.g., a thermal or redox initiator system.

In an alternative preferred embodiment, at least a portion of the thermoplastic phase is made by a mass polymerization process, wherein particles of the material from which the elastomeric phase is to be formed are dispersed in a mixture of the monomers from which the rigid thermoplastic phase is to be formed and the monomers of the mixture are then polymerized to form the rubber modified thermoplastic resin.

The amount of grafting that takes place between the rigid thermoplastic phase and the elastomeric phase varies with the relative amount and composition of the elastomeric phase. In a preferred embodiment, from 10 to 90 wt%, preferably from 30 to 80 wt%, even more preferably 65 to 80 wt% of the rigid thermoplastic phase is chemically grafted to the elastomeric phase and from 10 to 90 wt%, preferably from 20 to 70 wt%, more preferably from 20 to 35 wt% of the rigid thermoplastic phase remains "free, i.e., non-grafted.

The rigid thermoplastic phase of the rubber modified thermoplastic resin may be formed: (i) solely by polymerization carried out in the presence of the elastomeric phase or (ii) by addition of one or more separately polymerized rigid thermoplastic polymers to a rigid thermoplastic polymer that has been polymerized in the presence of the elastomeric phase. In a preferred, less than 10 pbw, more preferably less than 5 pbw of separately polymerized rigid thermoplastic polymer is added per 100 pbw of the thermoplastic resin composition of the present invention. Most preferably no separately polymerized rigid thermoplastic polymer is added to the thermoplastic resin composition of the present invention.

In a preferred embodiment, the rubber modified thermoplastic resin comprises an elastomeric phase comprising a polymer having repeating units derived from one or more conjugated diene monomers, and, optionally, further comprising repeating units derived from one or more monomers selected from vinyl aromatic monomers and monoethylenically unsaturated nitrile monomers, and the rigid thermoplastic phase comprises a polymer having repeating units derived from one or more monomers selected from vinyl aromatic monomers and monoethylenically unsaturated nitrile monomers.

Each of the polymers of the elastomeric phase and of the rigid thermoplastic resin phase of the rubber modified thermoplastic resin may, provided that the Tg limitation for the respective phase is satisfied, optionally include up to 10 wt% of third repeating units derived from one or more other copolymerizable monomers such as, e.g., monoethylenically unsaturated carboxylic acids such as, e.g., acrylic acid, methacrylic acid, itaconic acid, hydroxy(C₁-C₁₂)alkyl (meth)acrylate monomers such as, e.g., hydroxyethyl methacrylate; (C₄-C₁₂)cycloalkyl (meth)acrylate monomers such as e.g., cyclohexyl methacrylate; (meth)acrylamide monomers such as e.g., acrylamide and methacrylamide; maleimide monomers such as, e.g., N-alkyl maleimides, N-aryl maleimides, maleic anhydride, vinyl esters such as, e.g., vinyl acetate and vinyl propionate. As used herein, the term "(C₄₋C₁₂)cycloalkyl" means a cyclic alkyl substituent group having from 4 to 12 carbon atoms per group and the term "(meth)acrylamide" refers collectively to acrylamides and methacrylamides.

### Thermoplastic Polymer

Polymers suitable as the thermoplastic polymer of the composition present invention may be any polymer described above as being suitable for use as the rigid thermoplastic phase, as well as combinations thereof.

In a preferred embodiment, the thermoplastic polymer comprises a copolymer selected from vinyl aromatic monomers and monoethylenically unsaturated nitrile monomers and mixtures thereof. In a highly preferred embodiment, the thermoplastic polymer comprises a copolymer of derived from two or more monomers selected from the group consisting of styrene, α-methyl styrene and acrylonitrile.

### Fluoropolymer Additive

Suitable fluoropolymers and methods for making such fluoropolymers are known, see, e.g., U.S Patent Nos. 3,671,487, 3,723,373 and 3,383,092. Suitable fluoropolymers include homopolymers and copolymers that comprise repeating units derived from one or more fluorinated olefin monomers. The term "fluorinated olefin monomer" means an olefin monomer that includes at least one fluorine atom substituent. Suitable fluorinated olefin monomers include, e.g., fluoroethylenes such as, e.g., CF₂=CF₂, CHF=CF₂, CH₂=CF₂, CH₂=CHF, CClF=CF₂, CCl₂=CF₂, CClF=CClF, CHF=CCl₂, CH₂=CClF, and CCl₂=CClF and fluoropropylenes such as, e.g., CF₃CF=CF₂, CF₃CF=CHF, CF₃CH=CF₂, CF₃CH=CH₂, CF₃CF=CHF, CHF₂CH=CHF and CF₃CH=CH₂. In a preferred embodiment, the fluorinated olefin monomer is one or more of tetrafluoroethylene (CF₂=CF₂), chlorotrichloroethylene (CClF=CF₂), vinylidene fluoride (CH₂=CF₂) and hexafluoropropylene (CF₂=CFCF₃).

Suitable fluorinated olefin homopolymers include e.g., poly(tetrafluoroethylene), poly(hexafluoroethylene).

Suitable fluorinated olefin copolymers include copolymers comprising repeating units derived from two or more fluorinated olefin copolymers such as, e.g., poly(tetrafluoroethylene-hexafluoroethylene), and copolymers comprising repeating units derived from one or more fluorinated monomers and one or more non-fluorinated monoethylenically unsaturated monomers that are copolymerizable with the fluorinated monomers such as, e.g., poly(tetrafluoroethylene-ethylene-propylene) copolymers. Suitable non-fluorinated monoethylenically unsaturated monomers include e.g., olefin monomers such as, e.g., ethylene, propylene butene, acrylate monomers such as e.g., methyl methacrylate, butyl acrylate, vinyl ethers, such as, e.g., cyclohexyl vinyl ether, ethyl vinyl ether, n-butyl vinyl ether, vinyl esters such as, e.g., vinyl acetate, vinyl versatate.

In a highly preferred embodiment, the fluoropolymer is a poly(tetrafluoroethylene) homopolymer ("PTFE").

In a preferred embodiment, a fluoropolymer is added to the rubber modified thermoplastic resin in the form of a fluoropolymer additive that comprises particles of fluoropolymer encapsulated in a second polymer.

In a preferred embodiment, the fluoropolymer additive comprises from 30 to 70 wt%, more preferably 40 to 60 wt%, of the fluoropolymer and from 30 to 70 wt%, more preferably 40 to 60 wt%, of the second polymer.

The fluoropolymer additive is made by combining a fluoropolymer, in the form of an aqueous dispersion of fluoropolymer particles, with a second polymer, precipitating the combined fluoropolymer particles and second polymer and then drying the precipitate to form the fluoropolymer additive. In a preferred embodiment, the fluoropolymer particles range in size from 50 to 500 nanometers ("nm"), as measured by electron microscopy.

In a preferred embodiment, the fluoropolymer additive is made by emulsion polymerization of one or more monoethylenically unsaturated monomers in the presence of the aqueous fluoropolymer dispersion of the present invention to form a second polymer in the presence of the fluoropolymer. Suitable monoethylenically unsaturated monomers are disclosed above. The emulsion is then precipitated, e.g., by addition of sulfuric acid. The precipitate is dewatered, e.g., by centrifugation, and then dried to form a fluoropolymer additive that comprises fluoropolymer and an associated second polymer. The dry emulsion polymerized fluoropolymer additive is in the form of a free-flowing powder.

In a preferred embodiment, the monoethylenically unsaturated monomers that are emulsion polymerized to form the second polymer comprise one or more monomers selected from vinyl aromatic monomers, monoethylenically unsaturated nitrile monomer and (C₁-C₁₂)alkyl (meth)acrylate monomers.

In a highly preferred embodiment, the second polymer comprises repeating units derived from styrene and acrylonitrile. More preferably, the second polymer comprises from 60 to 90 wt% repeating units derived from styrene and from 10 to 40 wt% repeating units derived from acrylonitrile.

The emulsion polymerization reaction mixture may optionally include emulsified or dispersed particles of a third polymer, such as, e.g., an emulsified butadiene rubber latex.

The emulsion polymerization reaction is initiated using a conventional free radical initiator such as, e.g., an organic peroxide compound, such as e.g., benzoyl peroxide, a persulfate compound, such as, e.g., potassium persulfate, an azonitrile compound such as e.g., 2,2'-azobis-2,3,3-trimethylbutyronitrile, or a redox initiator system, such as, e.g., a combination of cumene hydroperoxide, ferrous sulfate, tetrasodium pyrophosphate and a reducing sugar or sodium formaldehyde sulfoxylate.

A chain transfer agent such as, e.g., a (C₉-C₁₃) alkyl mercaptan compound such as nonyl mercaptan, t-dodecyl mercaptan, may, optionally, be added to the reaction vessel during the polymerization reaction to reduce the molecular weight of the second polymer. In a preferred embodiment, no chain transfer agent is used.

In a preferred embodiment, the stabilized fluoropolymer dispersion is charged to a reaction vessel and heated with stirring. The initiator system and the one or more monoethylenically unsaturated monomers are then charged to the reaction vessel and heated to polymerize the monomers in the presence of the fluoropolymer particles of the dispersion to thereby form the second polymer.

Suitable fluoropolymer additives and emulsion polymerization methods are disclosed in EP 0 739 914 A1.

In a preferred embodiment, the second polymer exhibits a weight average molecular weight ("M_{w}") of from 75 x 10³ to 800 x 10³, a number average molecular weight ("Mₙ") of from 30 x 10³ to 200 x 10³ and a polydispersity (M_{w}/Mₙ) of less than or equal to 6.

### Phosphorus-containing Flame Retardant Compound

Phosphorus-containing compounds suitable as the phosphorus-containing flame retardant compound of the present invention are known compounds including monophosphate esters such as, for example, triphenyl phosphate, tricresyl phosphate, tritolyl phosphate, diphenyl tricresylphosphate, phenyl bisdodecyl phosphate, ethyl diphenyl phosphate, as well as diphosphate esters and oligomeric phosphates such as, for example, resorcinol diphosphate, diphenyl hydrogen phosphate, bisphenol A diphosphate, 2-ethylhexyl hydrogen phosphate. Suitable oligomeric phosphate compounds are set forth in coassigned U.S. Patent Number 5,672,645, to Johannes C. Gossens et al for a "Polymer Mixture Having Aromatic Polycarbonate, Styrene Containing Copolymer and/or Graft Copolymer and a Flame Retardant, Articles Formed Therefrom", the disclosure of which is hereby incorporated herein by reference.

In a preferred embodiment, the phosphorus-containing compound of the present invention is an oligomer compound according to the structural formula (IV): 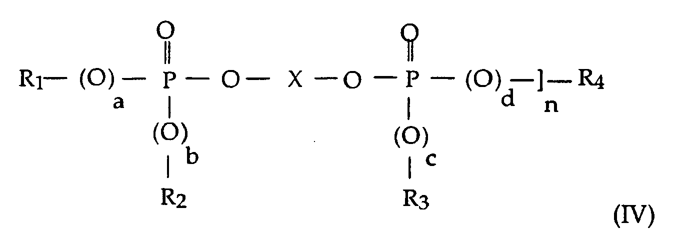 wherein R₁, R₂, R₃ and R₄ are each independently aryl, which may be optionally substituted with halo or alkyl,
X is arylene, optionally substituted with halo or alkyl,
a, b, c and d are each independently 0 or 1, and
n is an integer of from 1 to 5.

As used herein, aryl means a monovalent radical containing one or more aromatic rings per radical, which may optionally be substituted on the one or more aromatic rings with one or more alkyl groups, each preferably (C₁-C₆)alkyl and which, in the case wherein the radical contains two or more rings, may be fused rings.

As used herein, arylene means a divalent radical containing one or more aromatic rings per radical, which may optionally be substituted on the one or more aromatic rings with one or more alkyl groups, each preferably (C₁-C₆)alkyl and which, in the case wherein the divalent radical contains two or more rings, the rings may be may be fused or may be joined by a non-aromatic linkages, such as for example, an alkylene, alkylidene, any of which may be substituted at one or more sites on the aromatic ring with a halo group or (C₁-C₆)alkyl group.

In a preferred embodiment, X is a residue derived from resorcinol or hydroquinone.

In a preferred embodiment, R1, R2, R3 and R4 are each phenyl, a, b, c and d are each 1, X is phenylene and n is 2 or wherein the phosphate containing compound is a blend of phosphorus containing oligomers with n having an average value of from 1 to 2, more preferably from 1.2 to 1.7.

### Metallic Particles

The references herein to the appearance of articles molded from the composition of the present invention and to the colors and light reflecting properties of the appearance modifying additives of the composition of the present invention are to those exhibited under visual examination with "daylight" illumination, such as for example, that provided by sunlight or by a D65 (6500°K) light source.

Particles suitable for use as the metallic particle component of the composition of the present invention are particles that have an metallic exterior surface that reflects incident light and that are inert in the thermoplastic resin composition under the anticipated processing and end-use conditions and include, for example, aluminum, bronze, copper, copper-zinc, zinc, tin, nickel, gold, silver and stainless steel pigments, as well as mixtures thereof. Particles having a reflective metallic coating supported on a substrate are also suitable as the metallic particles. Such metallic particles exhibit a "sparkle" appearance, wherein the surfaces of the metallic particles reflect incident light as bright flashes of reflected light.

The metallic particles may comprise particles having various morphologies, such as, for example, spherical particles, irregularly shaped particles, flakes, that is, flattened particles, or a mixture thereof. In a preferred embodiment, the metallic particles comprises particles having an average "aspect ratio", that is, an average length-to diameter ratio, of less than 1:1.2. In a highly preferred embodiment, at least a portion of the metallic particles are in the form of flakes.

In a preferred embodiment, the metallic particles have an average particle size of from 0.05 to 5 mm, more preferably from about 0.05 to about 4 mm. In a more highly preferred embodiment, the metallic particles comprise first metallic particles having an average particle size of from about 0.05 to about 0.2 mm, more preferably from about 0.1 to about 0.2 mm, and second metallic particles having an average particle size of from greater than about 0.2 mm to about 4 mm, more preferably from greater than about 0.2 mm to about 1 mm.

### Composite Rubber Impact Modifier

The composition of the present invention further comprises a composite rubber impact modifier comprising a polyorganosiloxane/polyalkyl (meth)acrylate composite rubber substrate and a rigid thermoplastic superstrate, at least a portion of which is chemically bonded to the substrate.

The method discussed in Japanese Laid-Open Patent Application 64-79257, for example, can be used to manufacture this silicone rubber impact modifier

In a preferred embodiment, silicone rubber is made by emulsion polymerization. Preferably, a latex of a polyorganosiloxane rubber is first prepared, and a monomer for synthesizing an alkyl (meth)acrylate rubber is then impregnated with the rubber particles of the polyorganosiloxane rubber latex, after which the monomer for synthesizing an alkyl (meth)acrylate rubber is polymerized.

The polyorganosiloxane rubber component can be prepared, for example, by emulsion polymerization using the organosiloxane and crosslinking agent (i) as set forth below and a graft linking agent (i) can also be used concurrently here.

Examples of organosiloxanes include dimethylsiloxane and other linear organosiloxanes. Various cyclic organosiloxanes with three or more members to their rings, and preferably three to six members, can also be used. Examples include hexamethylcyclotrisiloxane, octamethylcyclotetrasiloxane, decamethylcyclopenta-siloxane, dodecamethylcyclo-hexasiloxane, trimethyltriphenylcyclotrisiloxane, tetramethyltetraphenylcyclotetrasiloxane, and octaphenylcyclotetrasiloxane. These organosiloxanes can be used singly or in mixtures of two or more types. The amount in which these are used should be at least 50 wt%, and preferably at least 70 wt%, of the polyorganosiloxane rubber component.

The crosslinking agent (i) can be a trifunctional or tetrafunctional silane-based crosslinking agent, such as trimethoxymethylsilane, triethoxyphenylsilane, tetramethoxysilane, tetraethoxysilane, tetra-n-propoxysilane, and tetrabutoxysilane. Tetrafunctional crosslinking agents are preferred, and of these, tetraethoxysilane is particularly favorable. One crosslinking agent may be used by itself, or two or more types may be used together. The amount in which the crosslinking agent is used should be 0.1 to 30 wt% of the polyorganosiloxane rubber component.

A compound capable of forming units expressed by the following formulas is used as the graft linking agent (i):

CH₂=C(R²)-COO-(CH₂)ₚ-SiR¹ₙO_{(3-n)/2} (i-1)

CH₂=CH-SiR¹ₙO_{(3-n)/2} (i-2)

or

HS-(CH₂)ₚ-SiR¹ₙO(3-n)/2 (i-3)

wherein, in each of the above formulas:
R¹ is a lower alkyl group, such as a methyl group, ethyl group, or propyl group, or a phenyl group;
R² is a hydrogen atom or a methyl group;
n is 0, 1, or 2; and
p is an integer from 1 to 6.

Because a (meth)acryloyloxysilane capable of forming units expressed by the above formula (i-1) has such a high grafting efficiency, it is possible to form a more effective graft chain, an advantage of which is that high impact resistance will be exhibited. Methacryloyloxysilane is particularly favorable as a compound capable of forming units expressed by the formula (i-1). Specific examples of methacryloyloxy-silanes include β-methacryloyloxy-ethyldimethoxymethylsilane, γ-methacryloyloxypropyl-methoxydimethylsilane, γ-methacryloy-loxypropyldimethoxymethylsilane, γ-methacryloyloxypropyltrimethoxysilane, γ-methacryloyloxypropylethoxydiethylsilane, γ-methacryloyloxy-propyldiethoxymethylsilane, and δ-methacryloyloxybutyldiethoxy-methylsilane. One of these may be used by itself, or two or more types may be used together. The amount in which the crossing agent is used should be 0 to 10 wt% of the polyorganosiloxane rubber component.

A latex of this polyorganosiloxane rubber component can be manufactured, for example, by using one of the methods discussed in U.S. Patents 2,891,920 and 3,294,725. In the implementation of the present invention, a preferred method of manufacture is to subject a mixed solution of an orgariosiloxane, the crosslinking agent (i) and, as needed, the graft linking agent (i)to shear mixing with water using a homogenizer or the like in the presence of an emulsifier based on a sulfonic acid such as an alkylsulfonic acid. An alkylbenzenesulfonic acid is favorable because it will act as an emulsifier for the organosiloxane and, at the same time, as a polymerization initiator. It is good for a metal salt of an alkylbenzenesulfonic acid, a metal salt of an alkylsulfonic acid, or the like to be used concurrently here because it will have the effect of keeping the polymer stable during the graft polymerization.

The polyalkyl (meth)acrylate that makes up part of the above-mentioned composite rubber can be synthesized using an alkyl (meth)acrylate, a crosslinking agent (ii) and a graft linking agent (ii) as set forth below.

Suitable alkyl (meth)acrylates include the (C₁-C₁₂)alkyl (meth)acrylate monomers discussed above. The use of n-butyl acrylate is particularly favorable.

Examples of the crosslinking agent (ii) include ethylene glycol dimethacrylate, propylene glycol dimethacrylate, 1,3-butylene glycol dimethacrylate, and 1,4-butylene glycol dimethacrylate.

Examples of the graft linking agent (ii) include allyl methacrylate, triallyl cyanurate, and triallyl isocyanurate.

Allyl methacrylate can also be used as a crosslinking agent. These crosslinking agents and graft linking agents may be used singly, or two or more types may be used together. The combined amount in which these crosslinking agents and graft linking agents are used is 0.1 to 20 wt% of the polyalkyl (meth)acrylate rubber component.

The polymerization of the polyalkyl (meth)acrylate rubber component is accomplished by adding the above-mentioned alkyl (meth)acrylate, crosslinking agent, and graft linking agent to a latex of a polyorganosiloxane rubber component that has been neutralized by the addition of an aqueous solution of an alkali such as sodium hydroxide, potassium hydroxide, or sodium carbonate, and allowing an ordinary radical polymerization initiator to act on these components after they have been impregnated with the polyorganosiloxane rubber particles. As the polymerization proceeds, it forms a crosslinked network of polyalkyl (meth)acrylate rubber that is intertwined with the crosslinked network of the polyorganosiloxane rubber, so that the two are essentially inseparable. This yields a latex of a composite rubber of the polyorganosiloxane rubber component and the polyalkyl (meth)acrylate rubber component. In the implementation of the present invention, it is favorable to use a composite rubber having repeating units in which the main skeleton of the polyorganosiloxane rubber component is dimethylsiloxane, and having repeating units in which the main skeleton of the polyalkyl (meth)acrylate rubber component is n-butyl acrylate.

A composite rubber prepared in this manner by emulsion polymerization can be graft copolymerized with a vinyl monomer. When this composite rubber is extracted with toluene for 12 hours at 90°C, the gel content should be at least 80 wt%.

In order for a good balance to be achieved between flame resistance, impact resistance, appearance, and so on, the proportions of the polyorganosiloxane rubber component and the polyalkyl (meth)acrylate rubber component should be 3 to 90 wt% for the former and 10 to 97 wt% for the latter, and the average particle diameter of the composite rubber should be 0.08 to 0.6 µm.

Examples of the vinyl monomer that is graft polymerized with the above-mentioned composite rubber include styrene, α-methylstyrene, vinyltoluene, and other aromatic alkenyl compounds; methyl methacrylate, 2-ethylhexyl methacrylate, and other methacrylic esters; methyl acrylate, ethyl acrylate, butyl acrylate, and other acrylic esters; acrylonitrile, methacrylonitrile, and other vinyl cyanide compounds; and various other vinyl monomers. These can be used singly or as a combination of two or more types. A particularly favorable vinyl monomer is methyl methacrylate. The vinyl monomer should be contained in a proportion of 5 to 70 wt% per 30 to 95 wt% of the above-mentioned composite rubber.

The composite rubber-based graft copolymer can be separated and recovered by adding the above-mentioned vinyl monomer to the above-mentioned latex of a composite rubber, polymerizing this system by a radical polymerization technique in a single stage or multiple stages, and pouring the composite rubber-based graft copolymer latex thus obtained into hot water in which calcium chloride, magnesium sulfate, or another such metal salt has been dissolved, thereby salting out and solidifying the copolymer.

A suitable composite rubber-based graft copolymer latex is commercially available as Metablen S-2001 from Mitsubishi Rayon.

### Other Additives

The thermoplastic resin composition of the present invention may optionally also contain various conventional additives, such as: (1) antioxidants, such as, e.g., organophosphites, e.g., tris(nonylphenyl)phosphite, (2,4,6-tri-tert-butylphenyl)(2-butyl-2-ethyl-1,3-propanediol)phosphite, bis(2,4-di-t-butylphenyl)pentaerythritol diphosphite or distearyl pentaerythritol diphosphite, as well as alkylated monophenols, polyphenols, alkylated reaction products of polyphenols with dienes, such as, e.g., butylated reaction products of para-cresol and dicyclopentadiene, alkylated hydroquinones, hydroxylated thiodiphenyl ethers, alkylidene-bisphenols, benzyl compounds, acylaminophenols, esters of beta-(3,5-di-tert-butyl-4-hydroxyphenol)-propionic acid with monohydric or polyhydric alcohols, esters of beta-(5-tert-butyl-4-hydroxy-3-methylphenyl)-propionic acid with monohydric or polyhydric alcohols, esters of beta-(5-tert-butyl-4-hydroxy-3-methylphenyl) propionic acid with mono-or polyhydric alcohols, esters of thioalkyl or thioaryl compounds, such as, e.g., distearylthiopropionate, dilaurylthiopropionate, ditridecylthiodipropionate, amides of beta-(3,5-di-tert-butyl-4-hydroxyphenol)-propionic acid; (2) UV absorbers and light stabilizers such as, e.g., (i) 2-(2'-hydroxyphenyl)-benzotriazoles, 2-Hydroxy-benzophenones; (ii) esters of substituted and unsubstituted benzoic acids, (iii) acrylates, (iv) nickel compounds; (3) metal deactivators, such as, e.g., N,N'-diphenyloxalic acid diamide, 3-salicyloylamino-1,2,4-triazole; (4) peroxide scavengers, such as, e.g., (C₁₀₋C₂₀)alkyl esters of β-thiodipropionic acid, mercapto benzimidazole;(5) polyamide stabilizers; (6) basic co-stabilizers, such as, e.g., melamine, polyvinylpyrrolidone, triallyl cyanurate; urea derivatives, hydrazine derivatives; amines, polyamides, polyurethanes; (7) sterically hindered amines such as, e.g., triisopropanol amine or the reaction product of 2,4-dichloro-6-(4-morpholinyl)-1, 3, 5-triazine with a polymer of 1, 6-diamine, N, N'-Bis(-2, 2, 4, 6-tetramethyl-4-piperidenyl) hexane; (8) neutralizers such as magnesium stearate, magnesium oxide, zinc oxide, zinc stearate, hydrotalcite; (9) fillers and reinforcing agents, such as, e.g., silicates, TiO₂ glass fibers, carbon black, graphite, calcium carbonate, talc, mica; (9) other additives such as, e.g., lubricants such as, e.g., pentaerythritol tetrastearate, EBS wax, silicone fluids, plasticizers, optical brighteners, pigments, dyes, colorants, flameproofing agents; anti-static agents; blowing agents; as well as (10) other flame retardant additives such as, for example, borate flame retardant compounds, in addition to the above described phosphorus-containing flame retardant additive.

The thermoplastic resin composition of the present invention is made by combining and mixing the components of the composition of the present invention under conditions suitable for the formation of a blend of the components, such as for example, by melt mixing using, for example, a two-roll mill, a Banbury mixer or a single screw or twin-screw extruder, and, optionally, then reducing the composition so formed to particulate form, e.g., by pelletizing or grinding the composition.

The thermoplastic resin composition of the present invention can be molded into useful shaped articles by a variety of means such as injection molding, extrusion, rotational molding, blow molding and thermoforming to form articles such as, for example, computer and business machine housings, home appliances.

### Example 1 and Comparative Examples C1-C2

The components used in the thermoplastic resin compositions of Example 1 of the present invention and of Comparative Examples C1-C2 were as follows:
PC Polycarbonate resin derived from bisphenol A, phosgene and having a weight average molecular weight of about 27,000 g/mol.
ABS: Emulsion polymerized acrylonitrile-butadiene-styrene ("ABS") graft copolymer comprising 50 pbw of a discontinuous elastomeric phase (butadiene) and 50 pbw of a rigid thermoplastic phase (copolymer of 75 pbw styrene and 25 pbw acrylonitrile), wherein about 70 percent by weight of the rigid thermoplastic phase was grafted to the elastomeric phase and about 30 percent by weight was not grafted to the elastomeric phase;
SAN Copolymer of 75 pbw styrene and 25 pbw acrylonitrile.
TSAN: Additive made by copolymerizing styrene and acrylonitrile in the presence of an aqueous dispersion of PTFE (50 wt% PTFE, 50wt% styreneacrylonitrile copolymer).
RDP Resorcinol diphosphate (Rheofos RDP from FMC Corporation)
Si-IM Composite rubber impact modifier (Metablen S2001 from Mitsubishi Rayon Co., Ltd.).
Al Flake Aluminum flake particles (Silvet ET 2263 from Silberline).

The respective compositions were made by combining the above-listed components in the relative amounts (in pbw) set forth in TABLE I in a twin screw extruder. The compositions were then injection molded at 235°C into a 60°C mold to form samples for testing.

The samples were tested according to the following methods: metallic appearance was evaluated by visual inspection, flame resistance was measured according to UL94 V-0 at 1.6mm, falling dart impact performance was measured at 23°C according to ISO 6603/2 at "Maximum Force", tensile modulus was measured according to (ISO527), melt volume flow rate ("MVR") was measured according to ISO 1133 at 260°C using a 2.16kg weight, and Vicat B softening temperature was measured according to ISO306.

Results of the testing are set forth in TABLE I for each of the compositions of Example land Comparative Examples C1-C2 as: metallic appearance as "Yes" or "No", UL 94 V-0 rating as "Pass" or "Fail", falling dart performance expressed in Newtons ("N"), tensile modulus in megaPascals ("MPa"), melt volume flow rate ("MVR") expressed in milliliters per 10 minute ("ml/10 min") and Vicat B temperature expressed in °C. The results of the testing are set forth below in TABLE I for reach of the compositions of Example 1 and Comparative Examples C1-C2.

**TABLE I**

| | C1 | C2 | 1 |
|---|---|---|---|
| PC | 69.17 | 67.17 | 69.71 |
| SAN | 8 | 8 | 9 |
| RDP | 10.5 | 10.5 | 9.5 |
| ABS | 10 | 10 | 6.5 |
| T-SAN | 0.45 | 0.45 | 0.5 |
| Si-IM | -- | -- | 1.0 |
| Additives and Colorants | 1.79 | 1.88 | 1.88 |
| Al flake | -- | 2 | 2 |

| **Performance** | | | |
|---|---|---|---|
| Metallic Appearance | No | Yes | Yes |
| UL94 V-0 | Pass | Fail | Pass |
| Falling Dart (N) | 9200 | 8400 | 8700 |
| Tensile Modulus (MPa) | 2670 | 2890 | 2860 |
| MVR (ml/10 min) | 13.1 | 11.7 | 10.4 |
| Vicat B (°C) | 101 | 102 | 106 |

The composition of the present invention exhibits a metallic appearance and good physical properties, while unexpectedly providing good flame retardant properties.

## Claims

1. The thermoplastic resin composition of the present invention comprises, based on 100 parts by weight of the composition:
(a) from 50 to 80 parts by weight of an aromatic polycarbonate resin,
(b) from 5 to 10 parts by weight of a rubber modified graft copolymer comprising a discontinuous elastomeric phase dispersed in a continuous rigid thermoplastic phase, wherein at least a portion of the rigid thermoplastic phase is chemically grafted to the elastomeric phase and at least a portion of the rigid thermoplastic phase is not chemically grafted to the elastomeric phase,
(c) up to 15 parts by weight of a thermoplastic polymer having a glass transition temperature of greater than 25°C, provided that the combined amount of the thermoplastic polymer and the portion of the rigid thermoplastic phase that is not chemically grafted to the elastomeric phase of the graft copolymer does not exceed 20 parts by weight of the composition,
(d) from 5 to 15 parts by weight of a phosphorus containing flame retardant compound,
(e) from 0.05 to 5 parts by weight metallic particles, and
(f) a composite rubber impact modifier comprising a polyorganosiloxane/polyalkyl (meth)acrylate composite rubber substrate and a rigid thermoplastic superstrate, at least a portion of which is chemically bonded to the polyorganosiloxane/polyalkyl (meth)acrylate composite rubber substrate.

2. The composition of claim 1, wherein the composition comprises from 60 to 80 parts by weight of the aromatic polycarbonate resin, from 5 to 8 parts by weight of the rubber modified graft copolymer, from 5 to 15 of the rigid polymer, from 8 to 15 parts by weight of the phosphorus containing flame retardant compound and from 0.1 to 5 parts by weight of the metallic particles.

3. The composition of claim 1, wherein the aromatic polycarbonate resin comprises a linear aromatic polycarbonate resin or a branched aromatic polycarbonate resin.

4. The composition of claim 1, wherein the elastomeric phase comprises a polybutadiene rubber or a poly(styrene-butadiene) rubber and the rigid thermoplastic phase comprises structural units derived from one or more monomers selected from vinyl aromatic monomers and monoethylenically unsaturated nitrile monomers.

5. The composition of claim 4, wherein rigid phase comprises a copolymer derived from two or more monomers selected from the group consisting of styrene, α-methyl styrene and acrylonitrile.

6. The composition of claim 1, wherein the thermoplastic polymer comprises a copolymer of derived from two or more monomers selected from the group consisting of styrene, α-methyl styrene and acrylonitrile.

7. The composition of claim 1, wherein the phosphorus containing compound comprises a compound according to the structural formula: 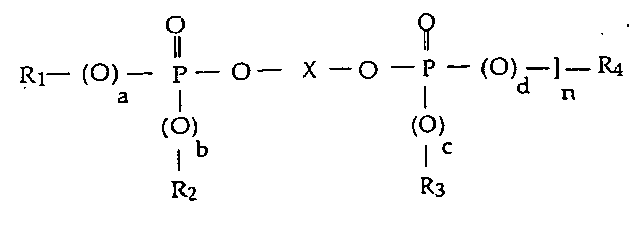 wherein R₁, R₂, R₃ and R₄ are each independently aryl, which may be optionally substituted with halo or alkyl, X is arylene, optionally substituted with halo or alkyl, a, b, c and d are each independently 0 or 1, and n is an integer of from 1 to 5.

8. The composition of claim 7, wherein the phosphate containing compound is a blend of phosphorus containing oligomers with n having an average value of from 1 to 2.

9. The composition of claim 1, further comprising a drip suppressing amount of fluoropolymer.

10. The composition of claim 9, wherein the fluoropolymer is a tetrafluoroethylene polymer.

11. The composition of claim 1, wherein the metallic particles are aluminum particles.

12. The composition of claim 1, wherein the metallic particles have an average particle size of from 0.05 to 5 millimeters.

13. The composition of claim 1, wherein the metallic particles are in the form of particles flattened particles having an average aspect ratio of less than 1:1.2.

## Patentansprüche

1. Die thermoplastische Harzzusammensetzung der vorliegenden Erfindung umfasst bezogen auf 100 Gewichtsteile der Zusammensetzung:
(a) 50 bis 80 Gewichtsteile eines aromatischen Polycarbonatharzes,
(b) 5 bis 10 Gewichtsteile eines Kautschuk modifizierten Pfropfcopolymers umfassend eine diskontinuierliche Elastomerphase dispergiert in einer kontinuierlichen steifen thermoplastischen Phase, wobei wenigstens ein Teil der steifen thermoplastischen Phase chemisch auf die elastomere Phase gepfropft ist und wenigstens ein Teil der steifen thermoplastischen Phase nicht chemisch auf die elastomere Phase gepfropft ist,
(c) bis zu 15 Gewichtsteile eines thermoplastischen Polymers mit einer Glasübergangstemperatur von größer als 25°C, vorausgesetzt dass die vereinigte Menge des thermoplastischen Polymers und des Anteils der steifen thermoplastischen Phase, welcher nicht chemisch auf die elastomere Phase des Pfropfcopolymers gepfropft ist, 20 Gewichtsteile der Zusammensetzung nicht übertrifft,
(d) 5 bis 15 Gewichtsteile einer Phosphor enthaltendend flammhemmenden Verbindung,
(e) 0,05 bis 5 Gewichtsteile Metallpartikel, und
(f) einen Kautschukschlagzähmodifiziererkomposit umfassend ein Polyorgansiloxan/Polyalkyl(meth)arcrylatkompositkautschuksubstrat und ein steifes thermoplastisches Superstrat, von dem wenigstens ein Teil chemisch an das Polyorgansiloxan/Polyalkyl(meth)arcrylatkompositkautschuksubstrat gebunden ist.

2. Zusammensetzung nach Anspruch 1, **dadurch gekennzeichnet, dass** die Zusammensetzung 60 bis 80 Gewichtsteile des aromatischen Polycarbonatharzes, 5 bis 8 Gewichtsteile des Kautschuk modifizierten Pfropfcopolymers, 5 bis 15 des steifen Polymers, 8 bis 15 Gewichtsteile der Phosphor enthaltenden flammhemmenden Verbindung und 0,1 bis 5 Gewichtsteile der Metallpartikel aufweist.

3. Zusammensetzung nach Anspruch 1, **dadurch gekennzeichnet, dass** das aromatische Polycarbonatharz ein lineares aromatisches Polycarbonatharz oder ein verzweigtes aromatisches Polycarbonatharz umfasst.

4. Zusammensetzung nach Anspruch 1, **dadurch gekennzeichnet, dass** die elastomere Phase einen Polybutadienkautschuk oder einen Poly(styrol-butadien)kautschuk umfasst und die steife thermoplastische Phase Struktureinheiten umfasst, die von einem oder mehreren Monomeren abgeleitet sind ausgewählt aus vinylaromatischen Monomeren und monoethylenisch ungesättigten Nitrilmonomeren.

5. Zusammensetzung nach Anspruch 4, **dadurch gekennzeichnet, dass** die steife Phase ein Copolymer umfasst, abgeleitet von zwei oder mehr Monomeren ausgewählt aus der Gruppe bestehend aus Styrol, α-Methylstyrol und Acrylnitril.

6. Zusammensetzung nach Anspruch 1, **dadurch gekennzeichnet, dass** das thermoplastische Polymer ein Copolymer umfasst, abgeleitet von zwei oder mehr Monomeren ausgewählt aus der Gruppe bestehend aus Styrol, α-Methylstyrol und Acrylnitril.

7. Zusammensetzung nach Anspruch 1, **dadurch gekennzeichnet, dass** die Phosphor enthaltende Verbindung eine Verbindung umfasst gemäß der Strukturformel: 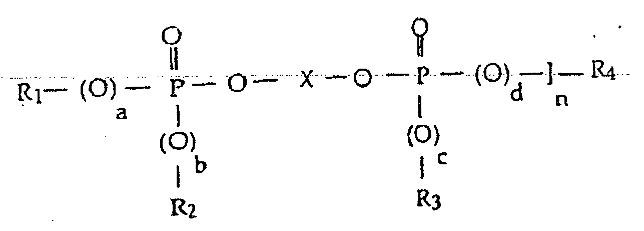 worin R₁, R₂, R₃ und R₄ jeweils unabhängig Aryl sind, welches gegebenenfalls mit Halogen oder Alkyl substituiert sein kann, X Arylen ist, gegebenenfalls substituiert mit Halogen oder Alkyl, a, b, c und d jeweils unabhängig 0 oder 1 sind, und n eine ganze Zahl von 1 bis 5 ist.

8. Zusammensetzung nach Anspruch 7, **dadurch gekennzeichnet, dass** die Phosphat enthaltende Verbindung ein Blend aus Phosphor enthaltenden Oligomeren ist, wobei n einen mittleren Wert von 1 bis 2 hat.

9. Zusammensetzung nach Anspruch 1, weiterhin umfassend eine Drip unterdrückende Menge eines Fluorpolymers.

10. Zusammensetzung nach Anspruch 9, **dadurch gekennzeichnet, dass** das Fluorpolymer ein Tetrafluorethylenpolymer ist.

11. Zusammensetzung nach Anspruch 1, **dadurch gekennzeichnet, dass** die Metallpartikel Aluminiumpartikel sind.

12. Zusammensetzung nach Anspruch 1, **dadurch gekennzeichnet, dass** die Metallpartikel eine mittlere Teilchengröße von 0,05 bis 5 Millimeter haben.

13. Zusammensetzung nach Anspruch 1, **dadurch gekennzeichnet, dass** die metallischen Teilchen in Form von flächigen Teilchen vorliegen mit einem mittleren Verhältnis von Länge zu Durchmesser (average aspect ratio) von weniger als 1:1,2.

## Revendications

1. Composition de résine thermoplastique comprenant, pour 100 parties en poids de composition :
a) de 50 à 80 parties en poids d'une résine polycarbonate aromatique,
b) de 5 à 10 parties en poids d'un copolymère de greffage modifié par caoutchouc, comprenant une phase élastomère discontinue, dispersée dans une phase continue thermoplastique rigide, au moins une partie de cette phase thermoplastique rigide étant chimiquement greffée sur la phase élastomère et au moins une partie de cette phase thermoplastique rigide n'étant pas chimiquement greffée sur la phase élastomère,
c) jusqu'à 15 parties en poids d'un polymère thermoplastique dont la température de transition vitreuse est supérieure à 25 °C, sous réserve que le total de ce polymère thermoplastique et de la partie de phase thermoplastique rigide qui n'est pas chimiquement greffée sur la phase élastomère du copolymère de greffage ne fasse pas plus de 20 parties en poids de la composition,
d) de 5 à 15 parties en poids d'un composé ignifugeant phosphoré,
e) de 0,05 à 5 parties en poids de particules métalliques,
f) et un agent de modification de la résistance au choc, caoutchouteux et composite, comprenant un substrat caoutchouteux composite à base de polyorganosiloxane et de poly(acrylate ou méthacrylate d'alkyle) et un superstrat thermoplastique rigide dont au moins une partie est chimiquement liée au substrat caoutchouteux composite à base de polyorganosiloxane et de poly(acrylate ou méthacrylate d'alkyle).

2. Composition conforme à la revendication 1, laquelle composition comprend de 60 à 80 parties en poids de la résine polycarbonate aromatique, de 5 à 8 parties en poids du copolymère de greffage modifié par caoutchouc, de 5 à 15 parties en poids du polymère rigide, de 8 à 15 parties en poids du composé ignifugeant phosphoré, et de 0,1 à 5 parties en poids des particules métalliques.

3. Composition conforme à la revendication 1, dans laquelle la résine polycarbonate aromatique comprend une résine polycarbonate aromatique linéaire ou une résine polycarbonate aromatique ramifiée.

4. Composition conforme à la revendication 1, dans laquelle la phase élastomère comprend un caoutchouc polybutadiène ou un caoutchouc poly-(styrène/butadiène) et la phase thermoplastique rigide comporte des motifs structuraux dérivés d'un ou plusieurs monomères choisis parmi les monomères vinyl-aromatiques et les monomères nitriles à insaturation monoéthylénique.

5. Composition conforme à la revendication 4, dans laquelle la phase rigide comprend un copolymère dérivé de deux monomères ou plus, choisis dans l'ensemble formé par le styrène, l'α-méthyl-styrène et l'acrylonitrile.

6. Composition conforme à la revendication 1, dans laquelle le polymère thermoplastique comprend un copolymère dérivé de deux monomères ou plus, choisis dans l'ensemble formé par le styrène, l'α-méthyl-styrène et l'acrylonitrile.

7. Composition conforme à la revendication 1, dans laquelle le composé phosphoré comprend un composé de formule structurale suivante : 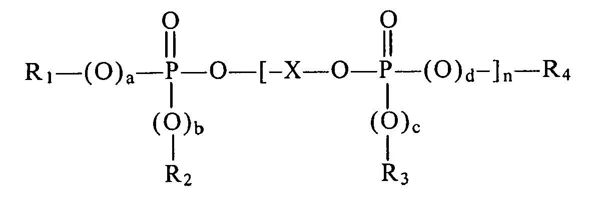 dans laquelle R₁, R₂, R₃ et R₄ représentent chacun, indépendamment, un groupe aryle qui peut, en option, porter un substituant halogéno ou alkyle, X représente un groupe arylène qui peut, en option, porter un substituant halogéno ou alkyle, a, b, c et d valent chacun, indépendamment, 0 ou 1, et n représente un nombre entier qui vaut de 1 à 5.

8. Composition conforme à la revendication 7, dans laquelle le composé phosphoré est un mélange d'oligomères phosphorés dans lequel n vaut en moyenne de 1 à 2.

9. Composition conforme à la revendication 1, qui contient en outre un polymère fluoré en une quantité à effet anti-goutte.

10. Composition conforme à la revendication 9, dans laquelle le polymère fluoré est un polymère de tétrafluoroéthylène.

11. Composition conforme à la revendication 1, dans laquelle les particules métalliques sont des particules d'aluminium.

12. Composition conforme à la revendication 1, dans laquelle les particules métalliques ont une taille moyenne de 0,05 à 5 mm.

13. Composition conforme à la revendication 1, dans laquelle les particules métalliques se présentent sous forme de particules aplaties dont le rapport d'aspect moyen est inférieur à 1/1,2.
